# EUROPÄISCHE PATENTANMELDUNG

(11) **EP 2 434 182 A1**
(43) Veröffentlichungstag der Anmeldung: **28.03.2012**
(21) Anmeldenummer: 11008645.1
(22) Anmeldetag: 24.09.2007
(51) Int. Cl.: F16H 55/34, F16H 15/42

(54) **Kegelreibringgetriebe**

(30) Priorität: 22.09.2006 DE 102006045343; 11.01.2007 DE 102007002581
(62) Teilanmeldung aus: 07817567.6
(71) Anmelder: Rohs, Ulrich, 52351 Düren (DE)
(72) Erfinder: Brandwitte, Werner, 52379 Langerwehe (DE); Dräger, Christoph, 52379 Langerwehe (DE); Rohs, Ulrich, 52351 Düren (DE)
(74) Vertreter: Reuther, Martin

(57) **Zusammenfassung**

Um Belastungen auf Reibflächen bei Kegelreibringgetrieben besser zu verkraften, schlägt die Erfindung ein Kegelreibringgetriebe mit zumindest zwei voneinander beabstandet angeordneten Reibkegeln und einem in diesem Abstand verlagerbar angeordneten, ein Drehmoment von einem der beiden Reibkegeln auf den anderen der beiden Reibkegeln übertragenen Reibring vor, wobei wenigstens eine Reibfläche axial variiert und die axiale Variation der Reibfläche in wenigsten zwei konvexen Bereichen einen Radius über 0,1 mm und/oder einen Radius mehr als ein Hundertstel der Breite des Reibringes aufweist, wobei Nuten und Erhebungen an der Reibfläche ein Rillenprofil der Reibfläche bilden, welches axial variiert, und die Erhebungen des Rillenprofils Wellenberge der Reibfläche bilden und wobei die Reibfläche zum Bilden einer axialen Variation radial umlaufende Nuten mit unterschiedlich ausgebildeten Nuttiefen und/oder Nutbreiten aufweist.

## Beschreibung

Die Erfindung betrifft Kegelreibringgetriebe mit zumindest zwei von einander beabstandet angeordneten Reibkegeln und einem in diesem Abstand entlang von Reibflächen auf den Reibkegeln verlagerbar angeordneten, ein Drehmoment von einem der beiden Reibkegel auf den anderen der beiden Reibkegeln übertragenden Reibring, wobei wenigstens eine Reibfläche axial variiert.

Derartige Kegelreibringgetriebe sind beispielsweise aus der WO 2004/031615 A2 hinlänglich bekannt, wobei die Variation der Reibfläche dazu dient, die Flächenpressung zu vergleichmäßigen, die ansonsten wegen der stark voneinander abweichenden Laufflächendurchmesser, insbesondere in Bezug auf Kegelreibringgetriebe, bei denen der Reibring zumindest einen der Kegel umgreift, ebenfalls sehr starken Abweichungen unterworfen ist. Besonders bewährt haben sich diesbezüglich die in dieser Druckschrift offenbarten Nuten, die sehr gezielt in eine Oberfläche eingebracht werden können.

In der Praxis stellt sich jedoch heraus, dass derartig ausgestaltete Oberflächen stark verschleißen.

Es ist daher Aufgabe vorliegender Erfindung ein gattungsgemäßes Kegelreibringgetriebe derart weiter zu entwickeln, dass eine konstruktiv einfache derartige Oberflächenvariation erzielt wird.

Die Aufgabe der Erfindung wird durch ein Kegelreibringgetriebe mit den Merkmalen nach Anspruch 1 gelöst, insbesondere indem die Reibfläche zum Bilden einer axialen Variation radial umlaufende Nuten mit unterschiedlich ausgebildeten Nuttiefen und/oder Nutbreiten aufweist.

Ein Verschleiß der Reibfläche kann minimiert werden, indem bei dem Kegelreibringgetriebe mit zumindest zwei voneinander beabstandet angeordneten Reibkegeln und einem in diesem Abstand entlang von Reibflächen auf den Reibkegeln verlagerbar angeordneten, ein Drehmoment von einem der beiden Reibkegel auf den anderen der beiden Reibkegeln übertragenden Reibring wenigstens eine Reibfläche axial variiert und die axiale Variation der Reibfläche in wenigstens zwei konvexen Bereichen einen Radius über 0,1 mm und/oder einen Radius über einem Hundertstel der Breite B des Reibringes aufweist.

Vorteilhafter Weise sind die Belastungen der Reibfläche durch derart gewählte Radien wesentlich geringer, sodass die Kegel wesentlich weniger verschleißen.

In vorliegendem Zusammenhang beschreibt der Begriff ,,konvexe Bereiche" Oberflächenbereiche der Reibfläche, die in einem Schnitt konvex geformt sind. Dementsprechend ist erfindungsgemäß eine axiale Variation auf einen Axialschnitt gerichtet, in dem dann erfindungsgemäß konvexe Bereich ausgebildet sein sollen. Der Begriff ,,konvexe Bereiche" beschreibt im Zusammenhang mit vorliegender Erfindung dementsprechend insbesondere diejenigen Bereiche der Reibfläche, die Nuteinläufe, insbesondere auch im Sinne der Erfindung abgerundete Nuteneinläufe, bilden. Nicht hiervon erfasst sein sollen Variationen der Umhüllenden des jeweiligen Kegels, wie beispielsweise für den Reibring hinsichtlich seines Übersetzungsverhältnisses relevante Variationen der Reibfläche, wie beispielsweise Abweichungen von einer streng kegelförmigen Mantelfläche durch eine Steigungsänderung der Mantellinie.

Da mittels der vorstehend erläuterten konvexen Bereiche eine Reibfläche bereitgestellt wird, die zu einem Reibring eine im Wesentlichen reibende Verbindung ermöglicht, erfasst die vorliegende Erfindung eben nicht weitere aus dem Stand der Technik bekannte stufenlose Getriebe, bei welchen eine Kräfte- bzw. Drehmomente-Übertragung nicht aufgrund einer Reibverbindung zwischen Kegeln und einem die Kegel verbindenden Ring stattfindet, sondern für die Kräfte- bzw. Drehmomente-Übertragung Formschlussverbindungen genutzt werden, die sich zwischen den Kegeln und dem Ring ergeben. Beispiele hinsichtlich Kegelgetriebe, bei denen eine Kräfte- bzw. Drehmomente-Übertragung mittels formschlüssiger Verbindungen erzielt wird, sind aus dem Stand der Technik hinlänglich bekannt.

So ist in der Deutschen Patentschrift DE 825 933 B ein stufenloses Getriebe beschrieben, bei welchem in einem Spalt zwischen zwei aufgerauten bzw. gerillten Kegeln ein Hartgummiring umläuft. Es ist offensichtlich, dass der Hartgummiring, der zwischen den beiden Kegeln eingeklemmt ist, in die Rillen der Kegel eingreift, und hierdurch eine Formschlussverbindung mittels des in die einzelnen Rillen der Kegel eingreifenden Hartgummiringes erzielt wird. Somit unterscheidet sich diese Erfindung grundlegend von dem Stand der Technik, zudem die Problematik des Verhindems einer kritischen Flächenpressung zwischen miteinander reibenden Bauteilen eines Kegelreibringgetriebes weder erkannt noch beschrieben ist.

Ähnlich verhält es sich bei dem in der US-Patentschrift US 6,908,406 B2 beschriebenen Transmissionssystem, bei welchem ein elastischer Ring zwischen zwei mit Kerben versehenden Kegeln derart eingequetscht wird, dass die beiden an ihrem Oberflächen eingekerbten Kegel mittels des gequetschten Ringes in Wirkkontakt stehen. Jedoch erfolgt eine Kräfte- bzw. Drehmomente-Übertragung zwischen den miteinander korrespondierenden Bauteilen nicht aufgrund von reibschlüssigen Verbindungen sondern im Wesentlichen aufgrund von Formschlussverbindungen zwischen den Bauteilen. Somit offenbart die US-Patentschrift US 6,908,406 B2 ebenfalls kein Kegelreibringgetriebe, bei welchem zwischen einem Reibring und Reibkegeln eine Kräfte- bzw. Drehmomente-Übertragung reibend stattfindet.

Einer Formschlussverbindung zur Kräfte- bzw. Drehmomente-Übertragung zwischen zwei Kegelzahnrädern bedient sich auch das stufenlose Getriebe aus der Offenlegungsschrift DE 195 07 525 A1, bei welchem ein entsprechender Wirkkontakt zwischen den beiden Kegelzahnrädern mittels einer in sich geschlossenen Schraubenfederschleife erzielt wird. Insbesondere soll hier eine bisher durch Reibelemente bewirkte Kraftübertragung hinsichtlich Kegelräder nun mittels Kegelzahnräder und mittels in die Kegelzahnräder eingreifender Schraubenfederschleifen erzielt werden. Da die Kegelzahnräder des dort beschriebenen stufenlosen Getriebes mit ihren Zähnen formschlüssig mit den Schraubenfederschleifen wechselwirken, das erfindungsgemäße Kegelreibringgetriebe jedoch eine Reibverbindung zwischen dem Reibring und den Reibkegeln vorsieht, betrifft auch der in der Offenlegungsschrift DE 195 07 525 A1 offenbarte Gegenstand das vorliegende Kegelreibringgetriebe nicht.

Ein weiteres stufenlos einstellbares Kegelgetriebe ist aus der Patentschrift US 6,139,465 bekannt, bei welchem mittels eines zwischen zwei rotierenden Kegeln eingeklemmten Ringes die beiden Kegel formschlüssig miteinander verbunden werden. Um diesen Formschluss zwischen dem Ring und den Kegeln gewährleisten bzw. verstärken zu können, sind die Kegel in Längserstreckung an ihren Oberflächen zusätzlich mit Spalten ausgestattet. Auch hier kann keine Rede von einem Kegelreibringgetriebe sein, da Teile des dort gezeigten Rings in die mit Spalten versehene Oberfläche zumindest eines der Kegel eingreift.

Ein weiteres stufenlos einstellbares Getriebe mit ähnlich gestalteten Kegeln ist in der US-Patentschrift US 6,955,624 B2 beschrieben. Jedoch wird hier ein umlaufender Riemen nicht zwischen zwei Kegeln des stufenlos einstellbaren Getriebes eingeklemmt. Vielmehr wird der umlaufende Riemen mittels der beiden Kegel gespannt, in dem der Riemen die beiden Kegel umspannt. Um Kräfte bzw. Drehmomente zwischen den einzelnen Getriebebauteilen, also Riemen und Kegel, im Wesentlichen schlupffrei übertragen zu können, sind die Kegelobertlächen mit Längsrillen und die Riemenoberfläche mit Querrillen versehen, sodass der umlaufende Riemen besonders gut in die rillige Oberflächen der beiden Kegel eingreifen kann und hierdurch eine sichere Formschlussverbindung erzielt wird.

Auch hinsichtlich der Druckschriften FR 1.375.048 und FR 1.386.314 sind stufenlos verstellbare Kegelgetriebe beschrieben, deren Reibflächen derart gerillt sind, dass zwischen zwei zueinander beabstandeten Kegeln ein elastischer Riemen gequetscht werden und der so gequetschte Riemen besonders innig in Rillen der Kegelobertläche eingreifen kann, sodass eine schlupffreie Formschlussverbindung zwischen den Kegeln und dem elastischen Riemen hergestellt ist. Bis auf ein in der Figur 10 der letztgenannten französischen Druckschrift gezeigtes Rotationskörperbeispiel sind alle dort weiter gezeigten Rotationskörper von stufenlos einstellbaren Getrieben mit Längsspalten, die sich in Längserstreckung entlang der Rotationsachse der Rotationskörper ausdehnen, ausgestattet. Die in der Figur 10 gezeigten Rotationskörper umfassen jedoch umlaufende Spalten und Zähne, in welche ein gezahnter Riemen eingreifen kann, um einen guten Formschluss zu den Rotationskörpern zu erzielen. Eine Kräfte- und Drehmomente-Übertragung zwischen dem Riemen und den zylindrisch oder kegelig ausbildbaren Rotationskörpern aufgrund einer Reibverbindung ist dabei naturgemäß jedoch ausgeschlossen.

Aus den vorgenannten Gründen handelt es sich bei allen erläuterten stufenlos einstellbaren Getrieben nicht um Kegelreibringgetriebe im Sinne vorliegender Erfindung, bei welchen eine Kräfte- bzw. Drehmomente-Übertragung lediglich mittels reibschlüssiger Verbindungen erzielt wird. Aufgrund der dort beschriebenen Formschlussverbindungen handelt es sich eben nicht um Kegelreibringgetriebe, die sich dadurch auszeichnen, dass sich zwischen einem Reibring und Reibkegeln eine Reibverbindung ausbilden kann. Hierbei kann zwischen dem Reibring und den Reibkegeln insbesondere eine fluidische Reibverbindung ausgebildet werden. In diesem Zusammenhang kann insbesondere zwischen dem Reibring und den Reibkegeln in einem ordnungsgemäßen Betriebszustand ein Traktions- und/oder ein Kühlfluid angeordnet sein, so dass lediglich in Sonderbetriebszuständen, beispielsweise in Anfahr- oder Stillstandssituationen die jeweiligen Oberflächen unmittelbar in Kontakt stehen.

Insbesondere bei einer tluidischen Reibverbindung mittels Traktions- bzw. Kühltluiden zwischen dem Reibring und den Reibkegeln kommen die erfindungsgemäßen konvexen Bereich vorteilhaft zur Geltung, da das Fluid teilweise durch die konvexen Bereiche verdrängt wird, wodurch sich die Flächenpressung geeignet anpassen lässt.

Eine weitere besonders bevorzugte Ausführungsvariante sieht vor, dass die Reibfläche zum Bilden einer axialen Variation radial umlaufende Nuten aufweist. Insbesondere mit solchen an einem Reibkegel radial umlaufenden Nuten gelingt es baulich einfach, eine Reibfläche in Ihrer axialen Längserstreckung nahezu beliebig zu variieren.

Je nach Ausgestaltung der Reibring-Reibkegel-Verbindung kann die axiale Variation der Reibfläche in den konvexen Bereichen einen Radius über 0,5 mm, vorzugsweise über 1 mm, aufweisen. Hierdurch kann bei ausreichender Nutschärfe die Belastung an den Nuteinläufen vorteilhaft weiter gesenkt werden.

Es versteht sich, dass Kombinationen von unterschiedlichen axialen Variationen auch an einer Reibfläche lediglich eines der beiden Kegels realisiert sein können.

Auch kann der Bereich der Reibfläche, welcher zur Realisierung eines ersten Gangbereichs dient, wesentlich geringere Radien in seinen konvexen Bereichen aufweisen, als dies in Bereichen der Reibfläche der Fall ist, die einen mittleren Gangbereich oder den höchsten Gangbereich bilden.

Um auch in konkav ausgebildeten Bereichen der Reibfläche noch günstigere Spannungsverläufe innerhalb des Kegelwerkstoffes zu erhalten und insbesondere bei der Verwendung eines Traktions- oder Kühltluids optimale Übertragungsverhältnisse realisieren zu können, ist es vorteilhaft, wenn die axiale Variation der Reibfläche in konkaven Bereichen einen Radius über 0,01 mm, vorzugsweise über 0,05 mm, aufweist. Hierbei versteht es sich, dass eine derartige Ausgestaltung konkaver Bereich in der. Reibfläche auch unabhängig von den übrigen Merkmalen vorliegender Erfindung entsprechend vorteilhaft ist.

Konkave Bereiche an einer Reibfläche sind beispielsweise von ausgerundeten Nutgründen realisiert.

Es hat sich gezeigt, dass eine lokale Betrachtung der Reibfläche im Hinblick auf konvexe und konkave Bereiche zwar schon erhebliche Vorteile gegenüber den Reibflächen aus dem Stand der Technik bringen. Besonders vorteilhaft ist es jedoch, wenn die Radien der konvexen bzw. der konkaven Bereiche der Reibfläche darüber hinaus auf die Gegebenheiten des verwendeten Reibringes, im speziellen auf die verwendete Breite des Reibringes, angepasst werden.

Dies liegt unter anderem daran, dass durch den Reibring die Belastungen auf der Reibfläche hervorgerufen werden, insbesondere auch wenn ein Traktions- und/oder Kühlfluid zur Anwendung kommt.

Eine diesbezügliche Ausführungsvariante sieht vor, dass die axiale Variation der Reibfläche in den konvexen Bereichen einen Radius über fünf Hundertstel, vorzugsweise über einem Zehntel, der Breite des Reibringes aufweist.

Aus den bereits vorstehend erläuterten Gründen ist es auch vorteilhaft, wenn die axiale Variation der Reibfläche in konkaven Bereichen einen Radius über einem Tausendstel vorzugsweise über fünf Hundertstel, der Breite des Reibringes aufweist, was dementsprechend auch unabhängig von den übrigen Merkmalen vorliegender Erfindung erfinderisch ist.

Durch nicht zu niedrige Radien in konkaven Bereichen kann darüber hinaus die Gleichmäßigkeit einer Drehmomentübertragung in Bezug auf Variationen der Dicke des Traktionsfluids oder eines sonstigen Mediums zwischen Reibring und Kegel erhöht werden.

Neben der Gestaltung der Radien der konvexen bzw. konkaven Bereiche ist es vorteilhaft, wenn die axialen Bereiche zwischen zwei Nuten ausreichend massiv gewählt werden, da diese den eigentlich tragfähigen Bereich der Reibfläche bilden. In diesem Zusammenhang können zumindest in axialen Bereichen mit mittlerem und/oder hohem Kegeldurchmesser die Nuten weniger als einem Drittel der Breite des Reibringes voneinander beanstandet sein. Durch eine Begrenzung des Nutenabstandes folgt eine größere Laufruhe bei Lastwechseln. Es versteht sich, dass die vorstehend erläuterten Nutabstände auch unabhängig von den übrigen Merkmalen vorliegender Erfindung für gattungsgemäße Kegelreibringgetriebe vorteilhaft sind.

An dieser Stelle sei angemerkt, dass bei der Wahl der Verhältnisse zwischen Nuttiefen und Nutbreiten einerseits und einer Reibringbreite andererseits idealerweise darauf geachtet werden sollte, dass hinsichtlich einer charakteristischen Spannungsverteilung bei der bereits zuvor beschriebenen Hertzschen Pressung sich eine erste Spannungsellipse eines ersten konvexen Bereichs und eine weitere Spannungsellipse eines weiteren durch eine Nut hiervon getrennten und benachbarten konvexen Bereichs nicht in dem Nutgrund der Nut zusammenlaufen. Somit können unerwünschte Spannungsspitzen im Bereich einer Nut, insbesondere eines Nutgrundes, verhindert werden, wodurch der Verschleiß einer Reibfläche weiter reduziert werden kann.

Weiter sollte jedoch angestrebt werden, dass die Spannungsellipsen möglichst groß gewählt werden, so dass auftretende Spannungen möglichst großflächig verteilt und damit verträglich in einen Reibkegelwerkstoff eingeleitet werden können.

Darüber hinaus ist es vorteilhaft, wenn die Reibfläche zum Bilden einer axialen Variation radial umlaufende Erhebungen aufweist. Auch mittels solcher radial umlaufenden Erhebungen kann eine Reibfläche konstruktiv einfach axial variiert werden.

Eine baulich besonders bevorzugte Ausführungsvariante sieht vor, dass radial umlaufende Erhebungen der Reibfläche von konvexen Bereichen der Reibfläche gebildet sind. Insbesondere laufen die konvexen Bereiche bei einer derartigen Ausführungsvariante an einer Reibfläche entsprechend radial um.

Ein besonders vorteilhaftes Wechselspiel zwischen solchen umlaufenden konvexen Bereichen und den umlaufenden Nuten kann sich ergeben, wenn jeweils eine einen konvexen Bereich bildende Erhebung der Reibfläche zwischen zwei Nuten der Reibfläche angeordnet ist. Durch ein solches Wechselspiel zwischen den Erhebungen und den Nuten kann eine Reibfläche besonders variantenreich gestaltet werden.

Vorteilhafterweise bilden Nuten und Erhebungen an der Reibfläche ein Rillenprofil der Reibfläche, welches axial variiert. Auf einem solchen Rillenprofil kann ein Reibring besonders verschleißarm und mit geeignet gewählten Änderungen in der Flächenpressung reibend abrollen.

Hierbei ist es vorteilhaft, wenn die Erhebungen des Rillenprofils Wellenberge der Reibfläche bilden, wobei diese Wellenberge vorteilhafter Weise als konvexe Bereiche mit einem Radius über 0,1 Millimeter ausgebildet sein können.

Eine weitere besonders vorteilhafte Ausführungsvariante der vorliegenden Erfindung sieht vor, dass der Reibring im Zusammenspiel mit einem Reibkegel immer wenigstens zwei oder mehr Erhebungen einer der Reibflächen überdeckt. Überdeckt der Reibring wenigstens zwei oder mehr Erhebungen ist die Gefahr nahezu ausgeschlossen, dass der Reibring in eine vorhandene Nut einkippen kann bzw. unruhig läuft. Vorteilhafterweise kann hierdurch auch unterbunden werden, dass ein konvexer Bereich der Reibfläche extrem ungünstig belastet wird, was einen erhöhten Verschleiß der Reibfläche zur Folge hätte.

Eine besonders effektive Maßnahme, die Laufruhe zwischen dem Reibring und einer der Reibflächen bei zunehmendem Reibkegeldurchmesser zu gewährleisten, kann darin gesehen werden, wenn mit zunehmender Nutenbreite sich die Breite der Wellenberge verringert.

Weitere Vorteile, Ziele und Eigenschaften vorliegender Erfindung werden anhand nachfolgender Beschreibung anliegender Zeichnung erläutert, in welcher schematisch ein Aufbau eines vorliegenden Kegelreibringgetriebes sowie beispielhaft unterschiedlich gestalte Oberflächen dargestellt sind.

Es zeigt
- Figur 1: schematisch eine Anordnung aus einem ersten Kegel, einem zweiten Kegel und einem Reibring,
- Figur 2: schematisch die Gestaltung einer Reibfläche in einem Bereich zur Realisierung eines niedrigen Ganges eines Getriebes,
- Figur 3: schematisch die Gestaltung einer Reibfläche in einem Bereich zur Realisierung eines mittleren Gangbereiches eines Getriebes,
- Figur 4: schematisch die Gestaltung einer Reibfläche in einem Bereich zur Realisierung eines höchsten Gangbereiches eines Getriebes, und
- Figur 5: schematisch einen Eingangskegel mit drei axialen Oberflächenvariationen für ein Kegelreibringgetriebe.

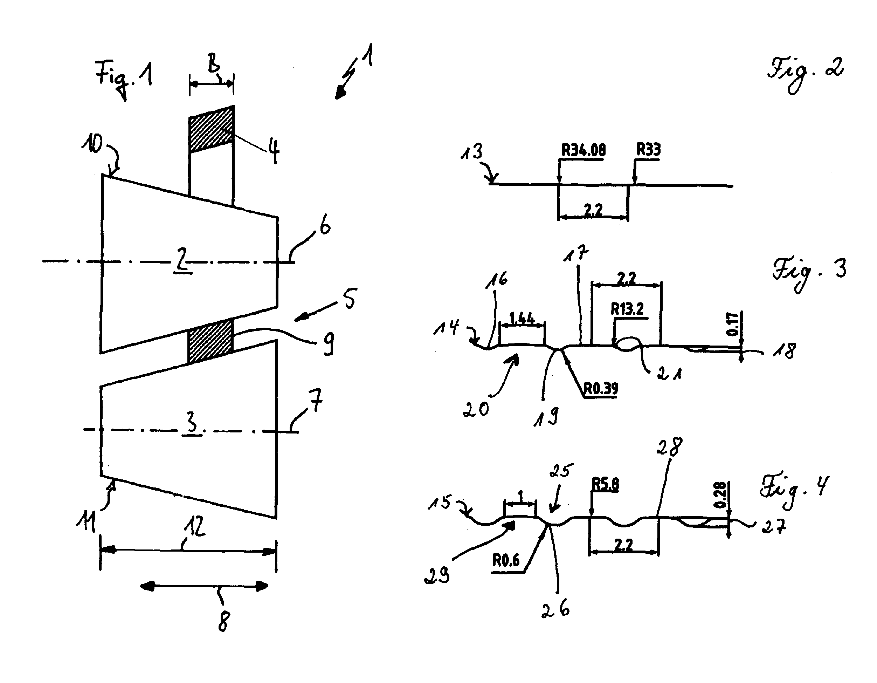

Die in der Figur 1 gezeigte Anordnung 1 zeigt die Hauptbestandteile eines Kegelreibringgetriebes, umfassend einen ersten Kegel 2, einen zweiten Kegel 3 und einen den ersten Kegel 2 umgreifenden Reibring 4. Der Kegelreibring 4 weist vorliegend eine Breite B auf. Beide Kegel 2 und 3 sind um einen Abstand 5 voneinander beabstandet, wobei der Kegel 2 um eine Rotationsachse 6 und der Kegel 3 um eine Rotationsachse 7 rotiert. Um das Übersetzungsverhältnis des Kegelreibringgetriebes zu verändern, wird der Reibring 4 gegenüber den Kegeln 2 und 3 gemäß des Doppelpfeiles 8 axial entlang der Drehachsen 6, 7 und damit auch axial zu den Kegeln 2, 3 verlagert. Hierbei wandert der mit den Kegeln 2, 3 unmittelbar in Kontakt stehende Teilbereich 9 des Reibringes 4 innerhalb des Spaltes 5 gemäß der Bewegungsrichtung 8 entsprechend.

Um die Kraftübertragung zwischen dem Reibring 4 und den Kegeln 2, 3 sowie die Belastungen auf eine Reibfläche 10 des ersten Kegels 2 und auf die Reibfläche 11 1 des zweiten Kegels 3 möglichst günstig zu gestalten, variieren die Reibflächen 10, 11 entlang der axialen Längserstreckung 12 beider Kegel 2, 3, sodass sich hierdurch eine axiale Variation der Reibflächen 10, 11 ergibt.

Beispielhaft ist die besagte axiale Variation nachstehend anhand der Figuren 2 bis 4 beschrieben.

Hierbei zeigt der in der Figur 2 illustrierte Obertlächenbereich 13 eine Reibfläche 10, 11 des Kegelreibringgetriebes aus der Figur 1 in einem ersten bzw. sehr niedrigen Gangbereich. Der Oberflächenbereich 14 aus der Figur 3 ist eine Reibfläche 10, 11 in einem mittleren Gangbereich, wohingegen der Oberflächenbereich 15 gemäß Figur 4 einen höchsten Gangbereich einer Reibfläche 10, 11 darstellt.

Der Oberflächenbereich 13 weist im Wesentlichen Nuten (hier aus zeichnerischen Gründen nicht sichtbar) mit einer sehr geringen Tiefe auf. Die sich hier ergebenden Wellenberge haben einen Radius von R34,08 (die Radiusangaben R verstehen sich in mm) bzw. R33 und haben einen Abstand von 2,2 mm zueinander. Der Abstand wird in diesem Ausführungsbeispiel zwischen einem ersten Scheitelpunkt (hier nicht explizit eingezeichnet) eines ersten Wellenberges und einem zweiten Scheitelpunkt eines zweiten Wellenberges gemessen.

In den Oberflächenbereich 14 sind Nuten 16 bereits deutlicher ausgeprägt. Wellenberge 17 (hier nur exemplarisch beziffert) liegen ebenfalls 2,2 mm auseinander. In den Oberflächenbereich 14 haben die Nuten 16 eine Tiefe 18 von 0,17 mm und ihre ausgerundeten Nutgründe 19 haben einen Radius R0,39. Die Wellenberge 17 haben eine Breite 20 von etwa 1,4 mm, wobei sie abgerundete Nuteinläufe 21 aufweisen, die einen Radius R13,2 aufweisen.

Der Oberflächenbereich 15 umfasst Nuten 25 mit ausgerundeten Nutgründen 26 mit Werten R0,6 und einer Nuttiefe 27 von 0,28 mm. Zwischen den einzelnen Nuten 25 erstrecken sich Wellenberge 28, die ebenfalls 2,2 mm voneinander beabstandet angeordnet sind. Die Wellenberge haben vorliegend einen Radius R5,8 und eine Breite 29 von 1 mm, die sich von einem abgerundeten Nuteinlauf zu einem benachbarten abgerundeten Nuteinlauf erstrecken.

Durch die derart ausgestaltete Oberfläche läuft der Ring einerseits wesentlich ruhiger und kann ein verhältnismäßig hohes Drehmoment bei vertretbaren Anpresskräften übertragen. Auch zeigt sich die Lebensdauer der Reibfläche wesentlich gegenüber bekannten Reibflächen verlängert.

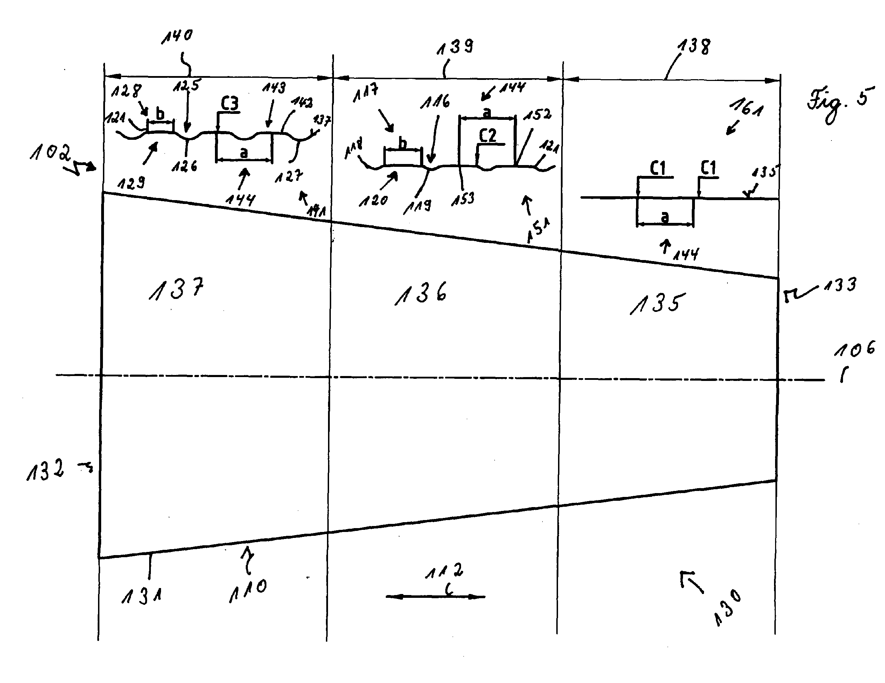

Der in der Figur 5 gezeigte Reibkegel 110 ist ein Eingangsreibkegel 130 eines hier nicht näher gezeigten Kegelreibringgetriebes, der um eine Rotationsachse 106 einer hier nicht weiter gezeigten Antriebswelle des Kegelreibringgetriebes rotieren kann.

Der Eingangsreibkegel 130 ist als Kegelstumpf 131 mit einem ersten Randbereich 132 und einem zweiten Randbereich 133 ausgebildet. Der Eingangsreibkegel 130 ist weiter mit einer Reibfläche 110 ausgestattet, die entlang der axialen Längserstreckung 112 des Eingangsreibkegels 130 variiert. Hierzu ist die Reibfläche 110 in drei Reibflächenvariationen 135, 136 und 137 grob unterteilt.

Die erste Reibflächenvariation 135 bildet einen ersten Gangbereich 138, in welchem sich ein Reibring (hier nicht explizit dargestellt, siehe jedoch Figur 1, Bezugsziffer 4) befindet, wenn das Kegelreibringgetriebe beispielsweise in eine Anfahrsituation eines Fahrzeuges geschaltet ist.

Mit der zweiten Reibflächenvariation 136 schließt sich an dem ersten Gangbereich 138 ein mittlerer Gangbereich 139 an, und daran mit der dritten Reibtlächenvariation 137 anschließend ein höchster Gangbereich 140.

Ausgehend von dem höchsten Gangbereich 140 und bei Betrachtung der dritten Reibflächenvariation 137 erkennt man hinsichtlich einer Detailansicht 141 der dritten Reibflächenvariation 137 Nuten 125 im Wechsel mit Wellenberge 128, die einerseits radial umlaufend um den Eingangsreibkegel 130 und andererseits axial nebeneinander entlang der axialen Längserstreckung 112 des Eingangsreibkegels 130 angeordnet sind.

Die Wellenberge 128 werden durch Erhebungen 142 gebildet, die zudem mit einem Radius C3 konvexe Bereiche 143 an dem Eingangskegel 130 bilden. Die Wellenberge 128 haben im Bereich der dritten Reibflächenvariation 137 eine Breite (b) 129, welche in Abhängigkeit von der gewünschten Flächenpressung zwischen dem Reibring und der Reibfläche 110 gewählt werden kann.

Der hier erwähnte Reibring hat eine Breite (a) 144, welche so gewählt ist, dass der Reibring immer mit zwei Wellenberge 128 in Kontakt steht und der Reibring hierbei nicht Gefahr läuft, in eine der Nuten 125 einzukippen und hierdurch die konvexen Bereiche 143, insbesondere an Nuteinläufen 121, zu beschädigen.

Mittels einer Nuttiefe 127 kann konstruktiv einfach das Nutvolumen variiert werden, wodurch wiederum die Menge an Traktionsfluid, welches zwischen dem Reibring und dem Eingangsreibkegel 130 vorhanden ist, variiert werden kann.

Ein Radius im Bereich von Nutgründen 126 wird in diesem Austührungsbeispiel in Abhängigkeit von der Ringbreite (a) 144 gewählt, wobei der Radius im Bereich der Nutgründe 126 in etwa ein Drittel der Reibringbreite (a) 144 entspricht.

Betrachtet man die zweite Reibflächenvariation 136 des zweiten Gangbereichs 139 des Eingangsreibkegels 130 in einer weiteren Detailansicht 150, erkennt man gut, dass die an der Reibfläche 110 umlaufenden Nuten 116 zum einen eine geringere Nuttiefe 118 und zum anderen Nutgründe 119 mit einem kleineren Radien als die Radien der Nutgründe 126 an der dritten Reibflächenvariation 137 aufweisen.

Der Radius im Bereich der Nutgründe 119 beträgt in diesem Ausführungsbeispiel ein Fünftel der Reibringbreite (a) 144.

Die Nuten 116 wechseln sich auch im Bereich der zweiten Reibflächenvariation 136 mit entsprechenden umlaufenden Wellenbergen 117 ab, die von an der Eingangsreibfläche 110 umlaufenden weiteren Erhebungen 151 gebildet sind. Die Wellenberge 117 haben im Bereich der zweiten Reibflächenvariation 136 eine etwas größere Breite (b) 120 als die Wellenberge 128 der dritten Reibflächenvariation 137. Mittels der Erhebungen 151 bzw. der hierdurch gebildeten Wellenberge 117 werden weitere konvexe Bereiche 153 an der Reibfläche 110 des Eingangsreibkegels 130 bereitgestellt. Diese weiteren konvexen Bereiche 153 haben einen Radius C2, der wie nachstehend noch erläutert, gewählt werden kann.

Mittels der so ausgebildeten weiteren konvexen Bereiche 153 können sogleich abgerundete Nuteinläufe 121 bereitgestellt werden, mit welchen die Wellenberge 117 in die beschriebenen Nutgründe 119 abgerundet übergehen können.

Hinsichtlich der ersten Reibflächenvariation 135 weist die Reibfläche 110 zeichnerisch hier nicht mehr sinnvoll darstellbare umlaufende Nuten auf, weswegen diese Nuten auch nicht beziffert sind (siehe dritte Detailansicht 161).

Diese umlaufenden Nuten im Bereich der ersten Reibflächenvariation 135 haben nur noch eine sehr geringe Tiefe, die wesentlich geringer ist als die Nutentiefen 118 und 127. Sich mit diesen Nuten abwechselnde Wellenberge (hier ebenfalls nicht beziffert) im Bereich der ersten Reibflächenvariation 135 weisen einen Radius C1 auf.

Die Radien C1, C2, C3 aller Wellenberge 117, 128 der Reibfläche 110 sind vorliegend abhängig von dem zu übertragenden Kräfte- bzw. Drehmomente-Verhältnissen, den verwendeten Reibkegel/Reibring-Geometrien und der zulässigen Flächenpressungen, welche zwischen dem Reibring und der Reibfläche 110 existieren, gewählt.

Die Breiten (b) der Wellenberge können ebenfalls von der Flächenpressung bzw. von der bereitzustellenden Kontakftläche zwischen dem Reibring und der Reibfläche 110 gewählt werden.

Die Ringbreite (a) 144 des Reibringes kann je nach der gewünschten Anwendung gewählt werden, die Ringbreite (a) 144 sollte jedoch mindestens immer zwei der Wellenberge überdecken, um so die Gefahr eines Hineinkippens des Reibrings insbesondere in einer der größeren umlaufenden Nuten 116, 125 zu verhindern.

### Bezugszeichenliste:

- 1: Anordnung
- 2: erster Reibkegel
- 3: zweiter Reibkegel
- 4: umgreifender Reibring
- 5: Abstand
- 6: erste Rotationsachse
- 7: zweite Rotationsachse
- 8: Bewegungsrichtung
- 9: Teilbereich
- 10: erste Reibfläche
- 11: zweite Reibfläche
- 12: axiale Längserstreckung
- 13: erster Oberflächenbereich
- 14: zweiter Oberflächenbereich
- 15: dritter Oberflächenbereich
- 16: Nuten
- 17: Wellenberge
- 18: Nuttiefe
- 19: Nutgründe
- 20: Breite
- 21: Nuteinläufe
- 25: Nuten
- 26: Nutgründe
- 27: Nuttiefe
- 28: Wellenberge
- 29: Breite
- 102: erster Reibkegel
- 106: Rotationsachse
- 110: Reibfläche
- 112: axiale Längserstreckung
- 116: Nuten
- 117: Wellenberge
- 118: Nuttiefe
- 119: Nutgründe
- 120: Wellenbergbreite
- 121: Nuteinläufe
- 125: Nuten
- 126: Nutgründe
- 127: Nuttiefen
- 128: Wellenberge
- 129: Wellenbergbreiten
- 130: Eingangsreibkegel
- 131: Kegelstumpf
- 132: erster Randbereich
- 133: zweiter Randbereich
- 135: erste Reibflächenvariation
- 136: zweite Reibflächenvariation
- 137: dritte Reibflächenvariation
- 138: erster Gangbereich
- 139: zweiter Gangbereich
- 140: höchster Gangbereich
- 141: erste Detailansicht
- 142: Erhebungen
- 143: konvexe Bereiche
- 144: Reibringbreite
- 151: weitere Detailansicht
- 152: weitere Erhebungen
- 153: weitere konvexe Bereiche
- 161: dritte Detailansicht

## Patentansprüche

1. Kegelreibringgetriebe mit zumindest zwei voneinander beabstandet angeordneten Reibkegeln (2, 3; 102) und mit einem in diesem Abstand (5) entlang von Reibflächen (10, 11; 110) auf den Reibkegeln (2, 3; 102) verlagerbar angeordneten, ein Drehmoment von einem der beiden Reibkegel (2, 3; 102) auf den anderen der beiden Reibkegeln (2, 3; 102) übertragenden Reibring (4), wobei wenigstens eine Reibfläche axial variiert, ***dadurch gekennzeichnet, dass*** die axiale Variation der Reibfläche (10, 11; 110) in wenigstens zwei konvexen Bereichen (143, 153) einen Radius (C1, C2, C3) über 0,1 mm und/oder einen Radius (C1, C2, C3) über einem Hundertstel der Breite (B; a, 144) des Reibringes (4) aufweist, wobei Nuten (16, 25; 116, 125) und Erhebungen (142, 152) an der Reibfläche (10, 11; 110) ein Rillenprofil der Reibfläche (10, 11; 110) bilden, welches axial variiert, und die Erhebungen (142, 152) des Rillenprofils Wellenberge (17, 28; 117, 128) der Reibfläche (10, 11; 110) bilden und wobei die Reibfläche (10, 11; 110) zum Bilden einer axialen Variation (135, 136, 137) radial umlaufende Nuten (16, 25; 116, 125) mit unterschiedlich ausgebildeten Nuttiefen (18, 27; 118, 127) und/oder Nutbreiten aufweist.

2. Kegelreibringgetriebe nach Anspruch 1, ***dadurch gekennzeichnet, dass*** die axiale Variation der Reibfläche (10, 11; 110) in den zwei konvexen Bereichen (143, 153) einen Radius (C1, C2, C3) über 0,5 mm, vorzugsweise über 1 mm, aufweist.

3. Kegelreibringgetriebe nach Anspruch 1 oder 2, ***dadurch gekennzeichnet, dass*** die axiale Variation der Reibfläche (10, 11) in wenigstens zwei konkaven Bereichen (19, 26; 119, 126) einen Radius über 0,01 mm, vorzugsweise über 0,05 mm, aufweist.

4. Kegelreibringgetriebe nach einem der vorstehenden Ansprüche, ***dadurch gekenrtzeichnet, dass*** die axiale Variation der Reibfläche (10, 11; 110) in den konvexen Bereichen (143, 153) einen Radius (C1, C2, C3) mehr als fünf Hundertstel, vorzugsweise mehr als ein Zehntel, der Breite (B; a, 144) des Reibringes (4) aufweist.

5. Kegelreibringgetriebe nach einem der vorstehenden Ansprüche, ***dadurch gekenrtzeichnet, dass*** die axiale Variation der Reibfläche (10, 11; 110) in wenigstens zwei konkaven Bereichen (19, 26; 119, 126) einen Radius über einem Tausendstel, vorzugsweise über fünf Hundertstel, der Breite (B; a 144) des Reibringes (4) aufweist.

6. Kegelreibringgetriebe nach einem der vorstehenden Ansprüche, ***dadurch gekennzeichnet, dass*** die konvexen Bereiche (143, 153) zwischen zwei Enden (132, 133) eines Reibkegels (2, 3; 102) angeordnet sind.

7. Kegelreibringgetriebe nach einem der vorstehenden Ansprüche, ***dadurch gekennzeichnet, dass*** die konvexen Bereiche (143, 153) in Kräfte- und/oder Drehmoment-Übertragungsbereichen der Reibkegel (2, 3; 102) angeordnet sind.

8. Kegelreibringgetriebe nach einem der vorstehenden Ansprüche, ***dadurch gekennzeichnet, dass*** zumindest in axialen Bereichen (14; 15; 138, 139, 140) mit mittlerem und/oder hohem Kegeldurchmesser Nuten (16; 25; 116, 125) weniger als einem Drittel der Breite (B, a, 144) des Reibringes (4) voneinander beabstandet sind.

9. Kegelreibringgetriebe nach einem der vorstehenden Ansprüche, ***dadurch gekennzeichnet, dass*** eine umlaufende Nut (16, 25; 116, 125) einer Reibfläche (10, 11; 110) von zwei konvexen Bereichen (143, 153) begrenzt wird.

10. Kegelreibringgetriebe nach einem der vorstehenden Ansprüche, ***dadurch gekenrtzeichnet, dass*** die Reibfläche (10, 11; 110) zum Bilden einer axialen Variation (135, 136. 137) radial umlaufende Erhebungen (142, 152) aufweist.

11. Kegelreibringgetriebe nach einem der vorstehenden Ansprüche, *d**adurch gekennzeichnet, dass*** radial umlaufende Erhebungen (142, 152) der Reibfläche (10, 11; 110) von konvexen Bereichen (143, 153) der Reibfläche (10, 11; 110) gebildet sind.

12. Kegelreibringgetriebe nach einem der vorstehenden Ansprüche, ***dadurch gekennzeichnet, dass*** jeweils eine einen konvexen Bereich (143, 153) bildende Erhebung (142, 152) der Reibfläche (10, 11; 110) zwischen zwei Nuten (16, 25; 116, 125) der Reibfläche (10, 11; 110) angeordnet ist.

13. Kegelreibringgetriebe nach einem der vorstehenden Ansprüche, ***dadurch gekennzeichnet, dass*** mit zunehmender Nutenbreite sich die Breite (120, 129) der Wellenberge (17, 28; 117, 128) verringert.

14. Kegelreibringgetriebe nach einem der vorstehenden Ansprüche, ***dadurch gekennzeichnet, dass*** zwischen dem Reibring (4) und den Reibkegeln (2, 3; 102) im Wesentlichen eine Reibverbindung, vorzugsweise ausschließlich eine fluidische Reibverbindung, besteht.

15. Kegelreibringgetriebe nach einem der vorstehenden Ansprüche, ***dadurch gekennzeichnet, dass*** zwischen dem Reibring (4) und den Reibkegeln (2, 3; 102) in einem Betriebszustand ein Traktions- und/oder ein Kühlfluid angeordnet ist.
